(19) Europäisches Patentamt
European Patent Office
Office européen des brevets

(11) **EP 4 528 722 A1**

(12) **EUROPEAN PATENT APPLICATION**
published in accordance with Art. 153(4) EPC

(43) Date of publication:
26.03.2025 Bulletin 2025/13

(21) Application number: 23884451.8

(22) Date of filing: 07.09.2023

(51) International Patent Classification (IPC):
*G10L 15/22* (2006.01)

(52) Cooperative Patent Classification (CPC):
G06F 9/4401; G06F 18/25; G10L 15/22;
G10L 17/08; Y02D 30/70

(86) International application number:
PCT/CN2023/117410

(87) International publication number:
WO 2024/093515 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.11.2022 CN 202211376580

(71) Applicant: Honor Device Co., Ltd.
Shenzhen, Guangdong 518040 (CN)

(72) Inventors:
• GAO, Fei
  Shenzhen, Guangdong 518040 (CN)
• WU, Biao
  Shenzhen, Guangdong 518040 (CN)
• WANG, Zhichao
  Shenzhen, Guangdong 518040 (CN)
• XIA, Risheng
  Shenzhen, Guangdong 518040 (CN)

(74) Representative: Isarpatent
Patent- und Rechtsanwälte
Barth Hassa Peckmann & Partner mbB
Friedrichstraße 31
80801 München (DE)

(54) **VOICE INTERACTION METHOD AND RELATED ELECTRONIC DEVICE**

(57) This application provides a speech interaction method and a related electronic device. The method includes: receiving a first speech signal; obtaining speech signal data based on the first speech signal when it is determined that speech detection is to be performed on the first speech signal; processing the speech signal data by using a speech detection model to obtain a first confidence level; acquiring acceleration data of the electronic device, and obtaining pose information of the electronic device based on the acceleration data; processing the pose information by using a pose detection model to obtain a second confidence level; processing target pose information and speech data by using an audio-pose detection fusion model to obtain a third confidence level; and determining, based on the first confidence level, the second confidence level, and the third confidence level, whether to start a speech interaction application. According to the method, the speech interaction application of the electronic device may be prevented from being woken up by mistake.

FIG. 3A

**(Cont. next page)**

CONT. FROM FIG.
3A

CONT. FROM FIG.
3A

Step 308: Process the speech signal data by using a speech detection model to obtain a first confidence level, first speech data, and second speech data

Acceleration data

Calculate pose information based on the acceleration data

Step 309: Process the pose information by using a pose detection model to obtain a second confidence level, first target pose information, and second target pose information

Step 310: Process first audio data, second audio data, the first target pose information, and the second target pose information by using an audio-pose detection fusion model to obtain a third confidence level

Step 311: Determine, based on the first confidence level, the second confidence level, and the third confidence level, whether the first speech signal is a target speech instruction

Yes
Step 312: First speech signal

Step 313: Parse the first speech signal and perform a first operation based on the first speech signal

FIG. 3B

2

## Description

This application claims priority to Chinese Patent Application No. 202211376580.5, filed with the China National Intellectual Property Administration on November 4, 2022 and entitled "SPEECH INTERACTION METHOD AND RELATED ELECTRONIC DEVICE", which is incorporated herein by reference in its entirety.

## TECHNICAL FIELD

This application relates to the field of speech interaction, and in particular, to a speech interaction method and a related electronic device.

## BACKGROUND

With the continuous development of an intelligent electronic device technology, various electronic devices have a function of speech assistant to implement interaction between a user and the electronic device. The speech assistant is a smart application that helps the user resolve a problem through intelligent interaction such as an intelligent conversation and instant questions and answers. Generally, there are three different types of speech assistants: a chat type, a question-and-answer type, and an instruction type. The chat assistant is used for achieving an objective of chatting and accompanying, and uses an AI technology to communicate with the user to perceive emotion of the user. The question-and-answer assistant is used for knowledge acquisition, and acquires knowledge or resolves a question through a conversation. Common applications are intelligent customer services of various platforms. The instruction assistant is used for device control. The instruction assistant controls the electronic device through a conversation to implement an operation. A common application includes a smart speaker, an IOT device, or the like. For example, the instruction assistant performs speech control: "Turn on the air conditioner and set it to 25 degrees."

For some application scenarios that do not require a wake-up word to wake up the speech assistant, the user can wake up the speech assistant without adding a specific wake-up word in a speech instruction. This enables speech interaction between the user and the electronic device to be natural. In addition, when the user performs speech interaction with the electronic device, the user does not use the specific wake-up word, which is conform to a user habit.

Therefore, how to reduce, when speech interaction is performed with the speech assistant without the wake-up word, a probability of the speech assistant being woken up by mistake is a problem that a person of skill is increasingly concerned about.

## SUMMARY

Embodiments of this application provide a speech interaction method and a related electronic device. The method resolves a problem of a speech interaction application being woken up by mistake.

According to a first aspect, an embodiment of this application provides a speech interaction method, applied to an electronic device. The electronic device includes a speech interaction application, and the method includes: receiving a first speech signal; obtaining speech signal data based on the first speech signal when it is determined that speech detection is to be performed on the first speech signal; processing the speech signal data by using a speech detection model to obtain a first confidence level and speech data, where the first confidence level is used for representing a probability that the first speech signal is a speech instruction sent by a user to the electronic device; acquiring acceleration data of the electronic device, and obtaining pose information of the electronic device based on the acceleration data; processing the pose information by using a pose detection model to obtain a second confidence level and target pose information, where the second confidence level is used for representing a probability that the electronic device is in a hand-held raised state; processing the target pose information and the speech data by using an audio-pose detection fusion model to obtain a third confidence level, where the third confidence level is used for representing a probability that the electronic device is in a hand-held raised state and the first speech signal is a speech instruction sent by a user to the electronic device; and determining, based on the first confidence level, the second confidence level, and the third confidence level, whether to start the speech interaction application.

In the foregoing embodiment, after receiving a speech signal, if the electronic device determines that speech detection needs to be performed on the speech signal, the electronic device processes speech signal data of the speech signal by using the speech detection model, processes pose information by using the pose detection module, and processes high-order feature data output by the pose detection module and the speech detection model by using an audio-pose monitoring model. These three models output three confidence levels respectively, and then the electronic device determines, based on the three confidence levels, whether the received speech signal is a target speech instruction for waking up a speech assistant. If the received speech signal is the target speech instruction for waking up the speech assistant, the speech assistant is woken up. If the received speech signal is not the target speech instruction for waking up the speech assistant, the speech assistant is not woken up. Because the first confidence level is calculated by using the speech detection model, the second confidence level is calculated by using the pose detection model, and the third confidence level is calculated by using the audio-pose detection fusion model, an application scenario in which the electronic device only has the hand-held raised state may be excluded by using the first confidence level, an application scenario in which the electronic device only has speech input may be excluded by using the second confidence level, and the third confidence level combines high-dimensional features of speech information data and the pose information to represent a real-time correlation between speech input and a pose state of the electronic device. Therefore, whether the first speech signal is the target speech instruction is determined based on the first confidence level, the second confidence level, and the third confidence level, so that an obtained determining result is accurate. This can reduce a probability of the speech assistant being woken up by mistake and improve user experience.

With reference to the first aspect, in a possible implementation, the determining, based on the first confidence level, the second confidence level, and the third confidence level, whether to start the speech interaction application specifically includes: setting a first confidence identifier to 1 when the first confidence level is greater than or equal to a first confidence threshold; setting the first confidence identifier to 0 when the first confidence level is less than the first confidence threshold; setting a second confidence identifier to 1 when the second confidence level is greater than or equal to a second confidence threshold; setting the second confidence identifier to 0 when the second confidence level is less than the second confidence threshold; setting a third confidence identifier to 1 when the third confidence level is greater than or equal to a third confidence threshold; setting the third confidence identifier to 0 when the third confidence level is less than the third confidence threshold; performing an AND logical operation on the first confidence identifier, the second confidence identifier, and the third confidence identifier to obtain a determining result; and determining, based on the determining result, whether to start the speech interaction application.

In this way, the electronic device may determine, based on the determining result, whether to send the first speech signal to the speech interaction application, to prevent the speech interaction application from being woken up by mistake and reducing user experience.

With reference to the first aspect, in a possible implementation, the determining, based on the determining result, whether to start the speech interaction application specifically includes: starting the speech interaction application when the determining result is 1; or skipping starting the speech interaction application when the determining result is 0.

With reference to the first aspect, in a possible implementation, the electronic device further includes a voiceprint detection module, and the determining, based on the determining result, whether to start the speech interaction application specifically includes: skipping starting the speech interaction application when the determining result is 0; or when the determining result is 1, detecting whether the first speech signal is a voice of a target user by using the voiceprint detection module, where the target user is a user of the electronic device; starting the speech interaction application if the first speech signal is the speech of the target user; or skipping starting the speech interaction application if the first speech signal is not the speech of the target user.

In this way, a voiceprint identification module sends the first speech signal to a speech assistant module only after determining that the first speech signal is a speech signal issued by the user. According to the method, only a user of an electronic device can wake up a speech assistant. This ensures privacy and security of the user while preventing the speech assistant from being triggered by mistake.

With reference to the first aspect, in a possible implementation, the determining, based on the first confidence level, the second confidence level, and the third confidence level, whether to start the speech interaction application specifically includes: calculating a first weight value of the first confidence level, a second weight value of the second confidence level, and a third weight value of the third confidence level; performing calculation, based on the first confidence level, the first weight value, the second confidence level, the second weight value, the third confidence level, and the third weight value, to obtain a fused confidence level; and determining, based on the fused confidence level, whether to start the speech interaction application.

With reference to the first aspect, in a possible implementation, the calculating a first weight value of the first confidence level, a second weight value of the second confidence level, and a third weight value of the third confidence level specifically includes: calculating the first weight value according to a formula $W_1 = \dfrac{[1/\mathrm{abs}(f_m - f_k)]}{\sum_{k=1}^{Q}[1/\mathrm{abs}(f_m - f_k)]}$, where $W_1$ is the first weight value, abs is an absolute value function, $f_m$ is a first confidence level output by the speech detection model this time, and k is a number of first Q first confidence levels closest to the first confidence level output this time; calculating the second weight value according to a formula $W_2 = \dfrac{[1/\mathrm{abs}(L_m - L_k)]}{\sum_{k=1}^{Q}[1/\mathrm{abs}(L_m - L_k)]}$, where $W_2$ is the second weight value, $L_m$ is a second confidence level output by the pose detection model this time, and k is a number of first Q second confidence levels closest to the second confidence level output this time; and calculating the third weight value according to a formula $W_3 = 1 - W_1 - W_2$, where $W_3$ is the third weight value.

With reference to the first aspect, in a possible implementation, the performing calculation, based on the first confidence level, the first weight value, the second confidence level, the second weight value, the third confidence level, and the third weight value, to obtain a fused confidence level specifically includes: calculating the fused confidence level according to a formula $K=f_m \times W_1 + L_m \times W_2 + R_m \times W_3$. K is the fused confidence level, and $R_m$ is the third confidence level.

With reference to the first aspect, in a possible implementation, the determining, based on the fused confidence level, whether to start the speech interaction application specifically includes: starting the speech interaction application if the fused confidence level is greater than or equal to a first start threshold; or skipping starting the speech interaction application if the fused confidence level is less than a first start threshold.

With reference to the first aspect, in a possible implementation, the electronic device includes a display screen, and if the fused confidence level is less than the first start threshold and greater than or equal to a second start threshold, prompt information is displayed on the display screen, and the prompt information indicates the user to reissue a speech instruction. The second start threshold is less than the first start threshold.

With reference to the first aspect, in a possible implementation, the electronic device further includes a voiceprint detection module, and the determining, based on the fused confidence level, whether to start the speech interaction application specifically includes: skipping starting the speech interaction application if the fused confidence level is less than a first start threshold; or if the fused confidence level is greater than or equal to a first start threshold, detecting whether the first speech signal is a voice of a target user by using the voiceprint detection module, where the target user is a user of the electronic device; starting the speech interaction application if the first speech signal is the speech of the target user; or skipping starting the speech interaction application if the first speech signal is not the speech of the target user.

In this way, a voiceprint identification module sends the first speech signal to a speech assistant module only after determining that the first speech signal is a speech signal issued by the user. According to the method, only a user of an electronic device can wake up a speech assistant. This ensures privacy and security of the user while preventing the speech assistant from being triggered by mistake.

With reference to the first aspect, in a possible implementation, before the obtaining speech signal data based on the first speech signal, the method further includes: acquiring a signal strength value of the speech signal, an acceleration variance D1 of the electronic device on an x-axis, an acceleration variance D2 of the electronic device on a y-axis, and an acceleration variance D3 of the electronic device on a z-axis; and determining, based on the signal strength value, D1, D2 and D3, whether speech detection needs to be performed on the first speech signal.

In this way, after receiving a speech signal, the electronic device first determines whether speech detection needs to be performed on the speech signal by using a primary wake-up free determining module. For a speech signal on which speech detection does not need to be performed, a process is ended and the speech signal can no longer be processed. The speech signal is determined by the primary wake-up free determining module, so that most scenarios that are not intended by the user are filtered out, thereby avoiding wake-up free of the speech assistant in the electronic device and reducing computing resources of the electronic device.

With reference to the first aspect, in a possible implementation, the speech data includes first speech data and second speech data, the first speech data is high-order speech feature information output by a convolutional layer of the speech detection model, and the second speech data is high-order speech feature information output by a fully connected layer of the speech detection model. The target pose information includes first target pose information and second target pose information, the first target pose information is high-order speech feature information output by a convolutional layer of the pose detection model, and the second target pose information is high-order speech feature information output by a fully connected layer of the pose detection model.

According to a second aspect, an embodiment of this application provides an electronic device. The electronic device includes: one or more processors, a display screen, and a memory. The memory is coupled to the one or more processors. The memory is configured to store computer program code. The computer program code includes computer instructions, and the one or more processors invoke the computer instructions to enable the electronic device to perform the following steps: obtaining speech signal data based on a first speech signal when it is determined that speech detection is to be performed on the first speech signal; processing the speech signal data by using a speech detection model to obtain a first confidence level and speech data, where the first confidence level is used for representing a probability that the first speech signal is a speech instruction sent by a user to the electronic device; acquiring acceleration data of the electronic device, and obtaining pose information of the electronic device based on the acceleration data; processing the pose information by using a pose detection model to obtain a second confidence level and target pose information, where the second confidence level is used for representing a probability that the electronic device is in a hand-held raised state; processing the target pose information and the speech data by using an audio-pose detection fusion model to obtain a third confidence level, where the third confidence level is used for representing a probability that the electronic device is in a hand-held raised state and the first speech signal is a speech instruction sent by a user to the electronic device; and determining, based on the first confidence level, the second confidence level, and the third confidence level, whether to start the speech interaction application.

With reference to the second aspect, in a possible implementation, the one or more processors invoke the computer instructions to enable the electronic device to perform the following steps: setting a first confidence identifier to 1 when the first confidence level is greater than or equal to a first confidence threshold; setting the first confidence identifier to 0 when the first confidence level is less than the first confidence threshold; setting a second confidence identifier to 1 when the second confidence level is greater than or equal to a second confidence threshold; setting the second confidence identifier to 0 when the second confidence level is less than the second confidence threshold; setting a third confidence identifier to 1 when the third confidence level is greater than or equal to a third confidence threshold; setting the third confidence identifier to 0 when the third confidence level is less than the third confidence threshold; performing an AND logical operation on the first confidence identifier, the second confidence identifier, and the third confidence identifier to obtain a determining result; and determining, based on the determining result, whether to start the speech interaction application.

With reference to the second aspect, in a possible implementation, the one or more processors invoke the computer instructions to enable the electronic device to perform the following steps: starting the speech interaction application when the determining result is 1; or skipping starting the speech interaction application when the determining result is 0.

With reference to the second aspect, in a possible implementation, the one or more processors invoke the computer instructions to enable the electronic device to perform the following steps: skipping starting the speech interaction application when the determining result is 0; or when the determining result is 1, detecting whether the first speech signal is a voice of a target user by using the voiceprint detection module, where the target user is a user of the electronic device; starting the speech interaction application if the first speech signal is the speech of the target user; or skipping starting the speech interaction application if the first speech signal is not the speech of the target user.

With reference to the second aspect, in a possible implementation, the one or more processors invoke the computer instructions to enable the electronic device to perform the following steps: calculating a first weight value of the first confidence level, a second weight value of the second confidence level, and a third weight value of the third confidence level; performing calculation, based on the first confidence level, the first weight value, the second confidence level, the second weight value, the third confidence level, and the third weight value, to obtain a fused confidence level; and determining, based on the fused confidence level, whether to start the speech interaction application.

With reference to the second aspect, in a possible implementation, the one or more processors invoke the computer instructions to enable the electronic device to perform the following steps: calculating the first weight value according to a formula $W_1 = \frac{[1/\mathrm{abs}(f_m - f_k)]}{\sum_{k=1}^{Q}[1/\mathrm{abs}(f_m - f_k)]}$, where $W_1$ is the first weight value, abs is an absolute value function, $f_m$ is a first confidence level output by the speech detection model this time, and k is a number of first Q first confidence levels closest to the first confidence level output this time; calculating the second weight value according to a formula $W_2 = \frac{[1/\mathrm{abs}(L_m - L_k)]}{\sum_{k=1}^{Q}[1/\mathrm{abs}(L_m - L_k)]}$, where $W_2$ is the second weight value, $L_m$ is a second confidence level output by the pose detection model this time, and k is a number of first Q second confidence levels closest to the second confidence level output this time; and calculating the third weight value according to a formula $W_3 = 1 - W_1 - W_2$, where $W_3$ is the third weight value.

With reference to the second aspect, in a possible implementation, the one or more processors invoke the computer instructions to enable the electronic device to perform the following steps: calculating the fused confidence level according to a formula $K = f_m \times W_1 + L_m \times W_2 + R_m \times W_3$. K is the fused confidence level, and $R_m$ is the third confidence level.

With reference to the second aspect, in a possible implementation, the one or more processors invoke the computer instructions to enable the electronic device to perform the following steps: starting the speech interaction application if the fused confidence level is greater than or equal to a first start threshold; or skipping starting the speech interaction application if the fused confidence level is less than a first start threshold.

With reference to the second aspect, in a possible implementation, the one or more processors invoke the computer instructions to enable the electronic device to perform the following steps: if the fused confidence level is less than the first start threshold and greater than or equal to a second start threshold, controlling the display screen to display prompt information, where the prompt information indicates the user to reissue a speech instruction. The second start threshold is less than the first start threshold.

With reference to the second aspect, in a possible implementation, the one or more processors invoke the computer instructions to enable the electronic device to perform the following steps: skipping starting the speech interaction application if the fused confidence level is less than a first start threshold; or if the fused confidence level is greater than or equal to a first start threshold, detecting whether the first speech signal is a voice of a target user by using the voiceprint detection module, where the target user is a user of the electronic device; starting the speech interaction application if the first speech signal is the speech of the target user; or skipping starting the speech interaction application if the first speech signal is not the speech of the target user.

With reference to the second aspect, in a possible implementation, the one or more processors invoke the computer instructions to enable the electronic device to perform the following steps: acquiring a signal strength value of the speech signal, an acceleration variance D1 of the electronic device on an x-axis, an acceleration variance D2 of the electronic device on a y-axis, and an acceleration variance D3 of the electronic device on a z-axis; and determining, based on the signal strength value, D1, D2 and D3, whether speech detection needs to be performed on the first speech signal.

According to a third aspect, an embodiment of this application provides an electronic device. The electronic device includes: a touch screen, a camera, one or more processors, and one or more memories. The one or more processors are coupled to the touch screen, the camera, and the one or more memories. The one or more memories are configured to store computer program code. The computer program code includes computer instructions. When the one or more processors execute the computer instructions, the electronic device is enabled to perform the method according to any one of the first aspect or the possible implementations of the first aspect.

According to a fourth aspect, an embodiment of this application provides a chip system. The chip system is used in an electronic device, and the chip system includes one or more processors. The one or more processors are configured to invoke computer instructions to enable the electronic device to perform the method according to any one of the first aspect or the possible implementations of the first aspect.

According to a fifth aspect, an embodiment of this application provides a computer program product including instructions. When the computer program product runs on an electronic device, the electronic device is enabled to perform the method according to any one of the first aspect or the possible implementations of the first aspect.

According to a sixth aspect, an embodiment of this application provides a computer-readable storage medium including instructions. When the computer instructions are run on an electronic device, the electronic device is enabled to perform the method according to any one of the first aspect or the possible implementations of the first aspect.

## BRIEF DESCRIPTION OF DRAWINGS

FIG. 1A to FIG. 1G are a group of schematic diagrams of application scenarios of a speech interaction method according to an embodiment of this application;

FIG. 2 is a framework diagram of a system of a speech interaction method according to an embodiment of this application;

FIG. 3A and FIG. 3B are a flowchart of a speech interaction method according to an embodiment of this application;

FIG. 4 is a schematic diagram of a user interface according to an embodiment of this application;

FIG. 5A(1) to FIG 5A(3) are a flowchart of another speech interaction method according to an embodiment of this application;

FIG. 5B is a diagram of a structure of a voiceprint detection model according to an embodiment of this application;

FIG. 6 is a schematic diagram of a hardware structure of an electronic device 100 according to an embodiment of this application; and

FIG. 7 is a block diagram of a software structure of an electronic device 100 according to an embodiment of this application.

## DESCRIPTION OF EMBODIMENTS

The following clearly and completely describes technical solutions in embodiments of this application with reference to the accompanying drawings in embodiments of this application. Apparently, the described embodiments are merely some embodiments rather than all embodiments of this application. Embodiment mentioned in the specification means that particular features, structures, or characteristics described with reference to the embodiment may be included in at least one embodiment of embodiments of this application. Appearances of phrases in various places in the specification do not all indicate the same embodiment, nor are separate or alternative embodiments mutually exclusive of other embodiments. A person skilled in the art may explicitly or implicitly understand that embodiments described in the specification may be combined with other embodiments. All other embodiments obtained by a person of ordinary skill in the art based on embodiments of this application without creative efforts shall fall within the protection scope of this application.

In the specification, claims, and accompanying drawings of this application, the terms "first", "second", "third", and the like are intended to distinguish between different objects but do not indicate a particular order. In addition, the terms "include", "have", and any variant thereof are intended to cover a non-exclusive inclusion. For example, a series of steps or units are included, or optionally, a step or unit that is not listed is included, or optionally, another step or unit that is intrinsic to a process, method, product, or device is included.

Only parts related to this application are shown in the accompanying drawings, rather than all content. Before discussing the example embodiments in more detail, it should be noted that some of the example embodiments are described as processes or methods depicted as flowcharts. Although the flowchart describes operations (or steps) as a sequential process, a plurality of operations may be performed in parallel, concurrently, or simultaneously. In addition, an order of the operations may be rearranged. The process may be ended when operations of the process are completed, but may also have additional steps not included in the figure. The process may correspond to a method, a function, a procedure, a subroutine, a subprogram, and the like.

Terms such as "component", "module", "system", and "unit" used in this specification are generally intended to refer to a computer-related entity, hardware, firmware, a combination of hardware and software, software, or software in execution. For example, a unit may be, but is not limited to, a process running on a processor, a processor, an object, an executable file, an executable thread, a program, and/or the unit is distributed between two or more computers. In addition, these units may be executed by various computer-readable media storing various data structures. The unit, for example, may communicate via a local and/or remote process based on a signal having one or more data packets (for example, data from a second unit interacting with another unit in a local system, a distributed system, and/or a network, for example, the Internet interacting with another system via a signal).

In embodiments of this application, an example in which a speech interaction application is a speech assistant is used for description.

With the continuous development of an intelligent electronic device technology, various electronic devices have a function of speech assistant to implement interaction between a user and the electronic device. The speech assistant is a smart application that helps the user resolve a problem through intelligent interaction such as an intelligent conversation and instant questions and answers. Generally, there are three different types of speech assistants: a chat type, a question-and-answer type, and an instruction type. The chat assistant is used for achieving an objective of chatting and accompanying, and uses an AI technology to communicate with the user to perceive emotion of the user. The question-and-answer assistant is used for knowledge acquisition, and acquires knowledge or resolves a question through a conversation. Common applications are intelligent customer services of various platforms. The instruction assistant is used for device control. The instruction assistant controls the electronic device through a conversation to implement an operation. A common application includes a smart speaker, an IOT device, or the like. For example, the instruction assistant performs speech control: "Turn on the air conditioner and set it to 25 degrees."

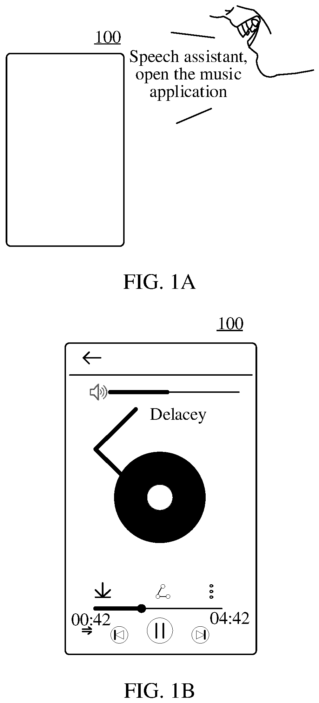

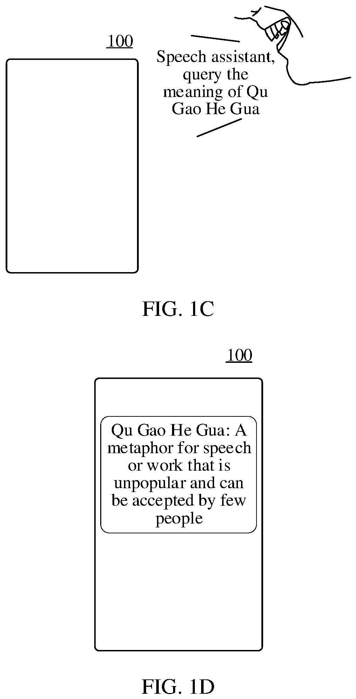

As shown in FIG. 1A, when a user approaches an electronic device 100 and issues a speech instruction "speech assistant, open the music application" to the electronic device 100, in response to the speech instruction of the user, the electronic device 100 opens the music application and displays a music interface as shown in FIG. 1B. Alternatively, as shown in FIG. 1C, when a user approaches the electronic device 100 and issues a speech instruction "speech assistant, query the meaning of Qu Gao He Gua" to the electronic device 100, in response to the speech instruction of the user, the electronic device 100 queries the meaning of "Qu Gao He Gua" on the Internet and displays a queried result on a user interface as shown in FIG. 1D.

There are two main manners for the user to wake up the speech assistant. One manner is that before waking up the speech assistant each time, the user needs to add a specific speech wake-up word in a speech instruction. The electronic device wakes up the speech assistant only when the electronic device detects that there is the speech wake-up word in the speech instruction of the user. Otherwise, the electronic device does not wake up the speech assistant. For electronic devices from different manufacturers, wake-up words for waking up the speech assistant are different. For example, a wake-up word of an electronic device of a manufacturer 1 is "X Ai". When a user wants to wake up a speech assistant in the electronic device of the manufacturer 1, the user needs to add "X Ai" in front of a speech instruction. For example, X Ai, please open the music application. This manner of adding a wake-up word in front of a speech instruction often causes speech interaction between the user and the electronic device to be unnatural and does not conform to a user habit.

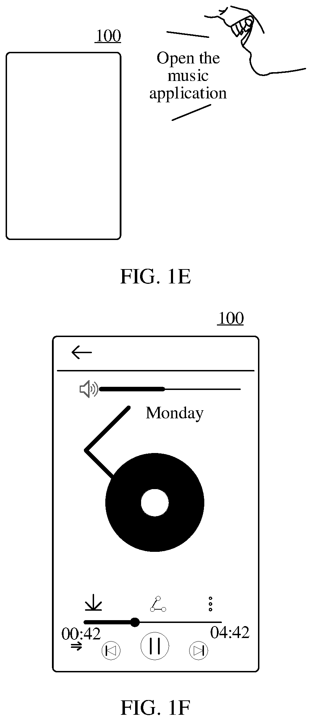

Another manner is that a user can wake up the speech assistant without adding a specific wake-up word in a speech instruction. In other words, the user directly sends the speech instruction to the electronic device to wake up the speech assistant and instruct the speech assistant to perform a corresponding operation. For example, as shown in FIG. 1E, when the user approaches the electronic device 100 and issues a speech instruction "open the music application" to the electronic device 100, in response to the speech instruction of the user, the electronic device 100 opens the music application and displays a music interface as shown in FIG. 1F.

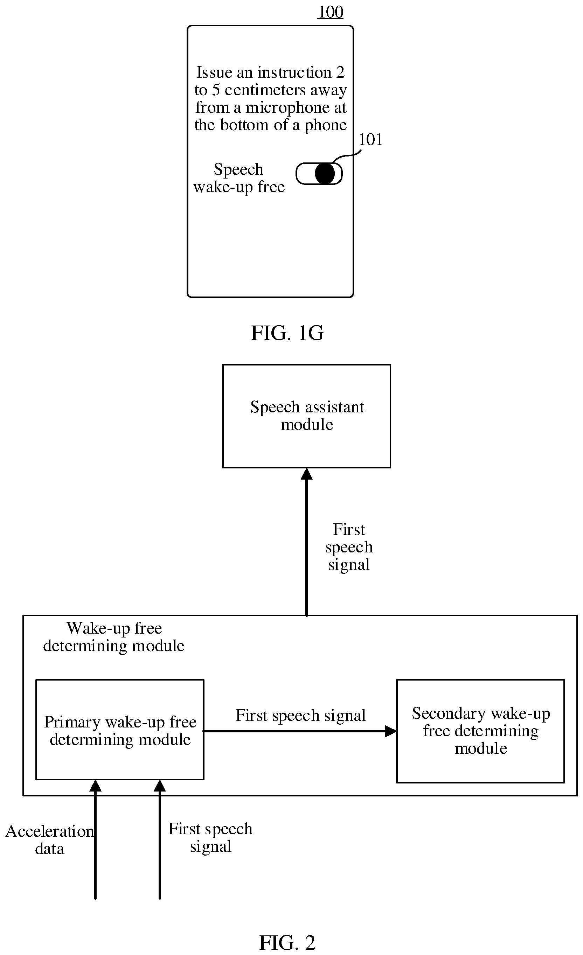

In a possible implementation, a user interface for enabling a speech assistant function may include a "speech wake-up free" control. As shown in FIG. 1G, when the electronic device 100 detects an input operation (for example, a single tap) for a "speech wake-up free" control 101, in response to the operation, the electronic device 100 may enable a "speech wake-up free" function. In other words, when the user sends the speech instruction to the electronic device 100, the speech assistant can be woken up without adding the specific wake-up word in the speech instruction. Optionally, after detecting the input operation for the "speech wake-up free" control 101, the electronic device 100 may further display prompt information for prompting the user to move closer to a microphone on a user interface as shown in FIG. 1G. For example, the user issues the instruction 2 to 5 centimeters away from the microphone at the bottom of the phone.

For the second wake-up manner of the speech assistant, the user can wake up the speech assistant without adding the specific wake-up word in the speech instruction. This enables speech interaction between the user and the electronic device to be natural. In addition, when the user performs speech interaction with the electronic device, the user does not use the specific wake-up word, which is conform to a user habit. However, because there is no specific wake-up word to wake up the speech assistant, the speech assistant of the electronic device may be triggered by mistake. For example, when the user is looking for a thing and puts the phone on a table, if the user asks others where the thing is, because there is no wake-up word, the electronic device may activate the speech assistant to communicate with the user. As a result, the speech assistant is triggered by mistake. Alternatively, when the user is speaking in a meeting and puts the phone on a table, and when the electronic device detects a speech signal issued by the user, the speech assistant may also be woken up. As a result, the speech assistant is triggered by mistake. The speech assistant is frequently triggered by mistake, resulting in inconvenience to the user and reducing user experience.

Therefore, to resolve the foregoing problem, an embodiment of this application provides a speech interaction method. The method includes: The electronic device acquires speech signal data and pose data. The speech signal data may include mel frequency cepstral coefficients of speech signals received by a plurality of microphones of the electronic device and energy differences of audio received by the plurality of microphones of the electronic device. The pose data may include acceleration data in an x-axis direction, acceleration data in a y-axis direction, and acceleration data in a z-axis direction acquired by an acceleration sensor of the electronic device. The electronic device uses the speech signal data as input of a speech detection model, and the speech detection model processes the speech signal to obtain a first confidence level. The electronic device uses the pose data as input of a pose detection model, and the pose detection model processes the pose data to output a second confidence level. The electronic device uses first speech data output by a convolutional layer of the speech detection model and second speech data output by a fully connected layer of the speech detection model as input of a speech-pose detection model. The electronic device uses first target pose data output by a convolutional layer of the pose detection model and second target pose data output by a fully connected layer of the pose detection model as input of the speech-pose model. The speech-pose model performs processing based on the first speech data, the second speech data, the first target pose data, and the second pose data, to output a third confidence level. The electronic device determines, based on the first confidence level, the second confidence level, and the third confidence level, whether to wake up the speech assistant.

A system framework of a speech interaction method according to an embodiment of this application is described below with reference to FIG. 2. As shown in FIG. 2, the system framework includes a wake-up free determining module and a speech assistant module. The wake-up free determining module is located at a digital audio processor layer (DSP layer), and the wake-up free determining module includes a primary wake-up free determining module and a secondary wake-up free determining module. The speech assistant module is located at an application layer. After receiving a first speech signal, the wake-up free determining module first processes the first speech signal by using the primary wake-up free determining module to detect whether speech detection needs to be performed on the first speech signal. If speech detection needs to be performed on the first speech signal, the first speech signal is sent to the secondary wake-up free determining module for speech detection. If it is detected that the first speech signal is a speech instruction sent to the electronic device, the wake-up free determining module sends the first speech signal to the speech assistant module, and then the speech assistant module performs a target operation based on the first speech signal.

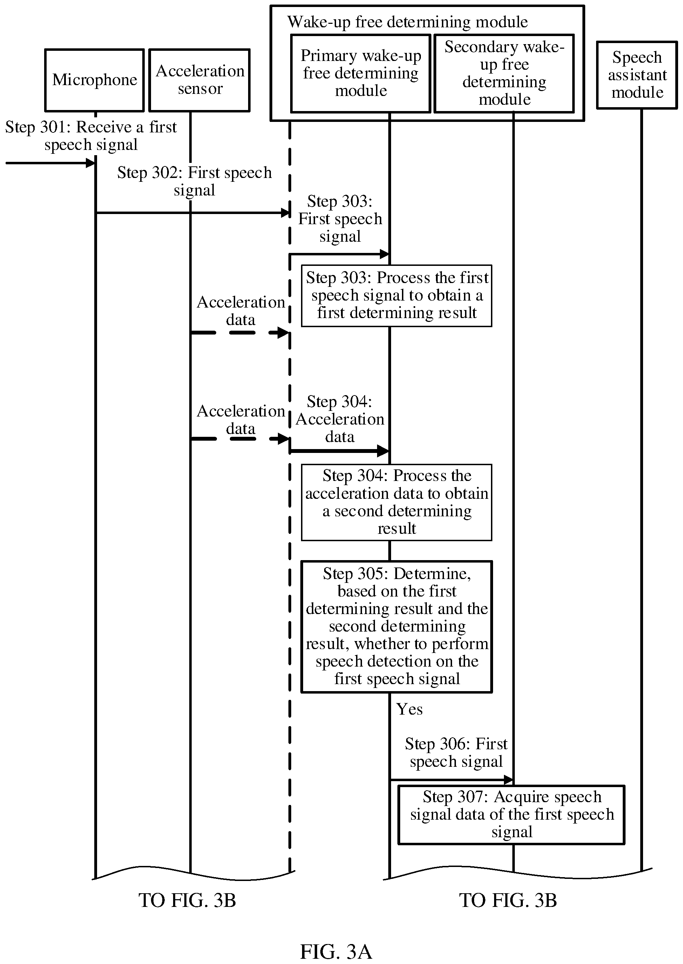

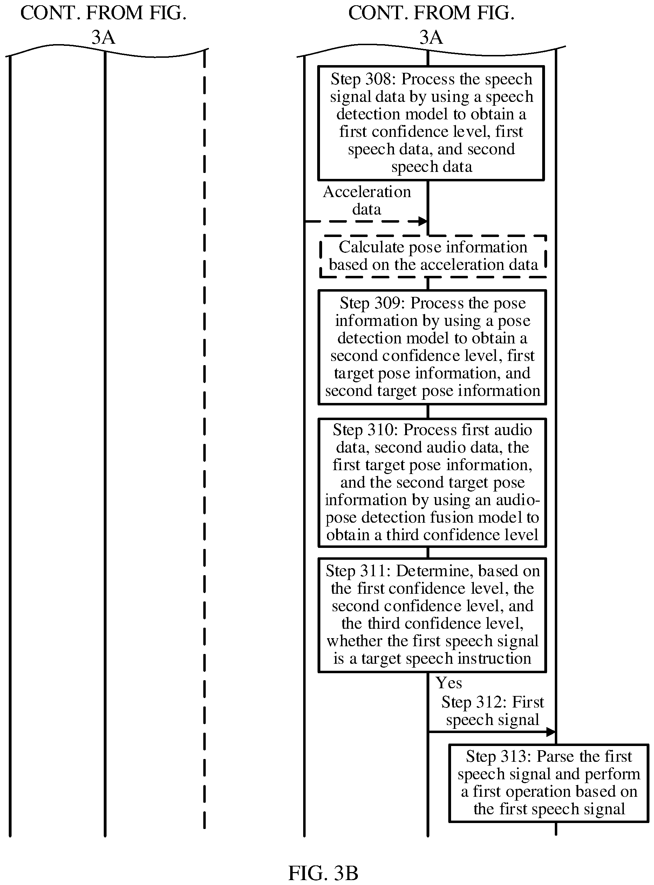

A process of a speech interaction method provided in an embodiment of this application is described below. FIG. 3A and FIG. 3B are a flowchart of a speech interaction method according to an embodiment of this application. In FIG. 3A and FIG. 3B, an electronic device receives an external speech signal via a microphone. A quantity of microphones included in the electronic device is N. N is an integer greater than or equal to 2. The electronic device shown in FIG. 3A and FIG. 3B includes a wake-up free determining module and a speech assistant module. The wake-up free determining module includes a primary wake-up free determining module and a secondary wake-up free determining module. The secondary wake-up free determining module includes a speech detection model, a pose detection model, and a speech-pose detection model. For ease of description, an example in which N is 2 is used for description in this embodiment of this application. A specific process is as follows:

Step 301: The electronic device receives a first speech signal.

Specifically, the first speech signal may be a speech signal issued by a user, or may be a speech signal issued by another voice source. The electronic device has one or more microphones, and the electronic device may receive an external speech signal via the microphone.

Step 302: The electronic device sends the first speech signal to the wake-up free determining module.

Step 303: The wake-up free determining module processes the first speech signal by using the primary wake-up free determining module to obtain a first determining result.

Specifically, after receiving the first speech signal, the electronic device may send the first speech signal to the wake-up free determining module. After receiving the first speech signal, the wake-up free determining module may process the first speech signal by using the primary wake-up free determining module. Then, the primary wake-up free determining module calculates signal strength of the first speech signal based on the received first speech signal, to determine whether the first speech signal is weak or strong. If the first speech signal is weak, it is determined that the first speech signal is not a speech instruction sent to the electronic device. After calculating the signal strength of the first speech signal, the primary wake-up free determining module may output the first determining result. The first determining result may be a first identifier or a second identifier. When the signal strength of the first speech signal is greater than or equal to a first threshold, the first determining result is the first identifier, and the first identifier indicates that the first speech signal is strong. When the signal strength of the first speech signal is less than the first threshold, the first determining result is the second identifier, and the second identifier indicates that the first speech signal is weak. The first threshold may be obtained based on a historical value, an empirical value, or experimental data. This is not limited in embodiments of this application.

Step 304: The wake-up free determining module processes acceleration data by using the primary wake-up free determining module to obtain a second determining result.

Specifically, after receiving the first speech signal, the electronic device may send the acceleration data to the wake-up free determining module. After receiving the acceleration data, the wake-up free determining module may process the acceleration data by using the primary wake-up free determining module to obtain the second determining result. The acceleration data may be obtained through an acceleration sensor built in the electronic device. Pose information may include an acceleration variance of the acceleration sensor on an x-axis, an acceleration variance of the acceleration sensor on a y-axis, and an acceleration variance of the acceleration sensor on a z-axis. Then, the electronic device determines whether the electronic device is in motion based on the acceleration variances corresponding to these three coordinate axes, to obtain the second determining result. The second determining result includes a third identifier and a fourth identifier. The third identifier indicates that the electronic device is in a motion state, and the fourth identifier indicates that the electronic device is in a stationary state.

For example, a manner in which the electronic device determines whether the electronic device is in motion based on the acceleration variances corresponding to the foregoing three coordinate axes, to obtain the second determining result may be: The electronic device may set variance thresholds for the three coordinate axes respectively: a first variance threshold D1, a second variance threshold D2, and a third variance threshold D3. D1 corresponds to the x-axis, D2 corresponds to the y-axis, and D3 corresponds to the z-axis. The first variance threshold, the second variance threshold, and the third variance threshold may be the same or different, and may be obtained based on a historical value, an empirical value, or experimental data. This is not limited in embodiments of this application. In the acceleration variances corresponding to the three coordinate axes, if there is one acceleration variance greater than or equal to a corresponding variance threshold, it is determined that the electronic device is in the motion state, and the second determining result includes the first identifier. For example, if the acceleration variance corresponding to the x-axis is greater than or equal to D1, it is determined that the electronic device is in the motion state. If the acceleration variances corresponding to the three coordinate axes are all less than the corresponding variance thresholds, it is determined that the electronic device is not in the motion state.

In a possible implementation, in the acceleration variances corresponding to the three coordinate axes, if there are two acceleration variances greater than or equal to corresponding variance thresholds, it is determined that the electronic device is in the motion state. For example, if the acceleration variance corresponding to the x-axis is greater than or equal to D1 and the acceleration variance corresponding to the y-axis is greater than or equal to D2, it is determined that the electronic device is in the motion state. In the acceleration variances corresponding to the three coordinate axes, if there is only one acceleration variance greater than or equal to a corresponding variance threshold, or the acceleration variances corresponding to the three coordinate axes are all less than the corresponding variance thresholds, it is determined that the electronic device is not in the motion state.

In a possible implementation, if the acceleration variances corresponding to the three coordinate axes are all greater than or equal to the corresponding variance thresholds, it is determined that the electronic device is in the motion state. Otherwise, it is determined that the electronic device is not in the motion state.

It should be understood that, step 303 may be performed before step 304, may be performed after step 304, or may be performed simultaneously with step 304. An execution order of step 304 and step 303 is not limited in this embodiment of this application.

Step 305: The primary wake-up free determining module determines, based on the first determining result and the second determining result, whether to perform speech detection on the first speech signal.

Specifically, after the primary wake-up free determining module calculates the first determining result and the second determining result, the electronic device can determine, based on the first determining result and the second determining result, whether to perform speech detection on the first speech signal. In other words, the electronic device detects whether the first speech signal is a target speech instruction for waking up a speech assistant of the electronic device. If it is determined that speech detection is to be performed on the first speech signal, the electronic device performs step 306. If it is determined that speech detection is not to be performed on the first speech signal, the electronic device ends the process.

A method for the electronic device to determine whether to perform speech detection on the first speech signal may be: If the first identifier is included in the first determining result and the third identifier is included in the second determining result, the electronic device determines to perform speech detection on the first speech signal. Otherwise, the electronic device determines not to perform speech detection on the first speech signal.

For example, assuming that the first identifier and the third identifier are 1, and the second identifier and the fourth identifier are 0, the electronic device may perform an "AND logical" operation on the identifier in the first determining result and the identifier in the second determining result. If an operation result is 1, the electronic device determines to perform speech detection on the first speech signal. If an operation result is 0, the electronic device determines not to perform speech detection on the first speech signal.

The electronic device can filter out, based on the signal strength of the first speech signal and the acceleration variance of the acceleration sensor, most scenarios that are not intended by the user. For example, a scenario in which a distance from the microphone of the electronic device is far (the speech signal received by the electronic device is weak), a scenario in which the user chats while playing with the electronic device (the variance of the acceleration data of the acceleration sensor is small), or the like is filtered out. For a scenario that is intended by the user, the electronic device performs speech detection on the received speech signal to more accurately determine whether the speech signal is an instruction for waking up the speech assistant. For a scenario that is not intended by the user, the electronic device does not perform speech detection on the received speech signal and ends the process. Because speech detection on the speech signal consumes a large quantity of computing resources, before performing speech detection on the received speech signal, the electronic device determines whether the first speech signal satisfies a speech detection condition. This can greatly resolve the computing resources of the electronic device and improve working performance of the electronic device.

Step 306: The primary wake-up free determining module sends the first speech signal to the secondary wake-up free determining module.

Specifically, after determining that speech detection is performed on the first speech signal, the primary wake-up free determining module sends the first speech signal to the secondary wake-up free determining module, so that the secondary wake-up free determining module performs speech detection on the first speech signal.

Step 307: The secondary wake-up free module acquires speech signal data of the first speech signal.

Specifically, after receiving the first speech signal sent by the wake-up free and module, the wake-up free may process the first speech signal to obtain the speech signal data of the first speech signal.

The speech signal data may include a mel frequency cepstral coefficient of the first speech signal and an energy difference M between a speech signal received by a first microphone and the first speech signal received by a second microphone. M is used for representing a distance between a voice source (a voice source of the first speech signal) and the electronic device. Greater M indicates a smaller distance between the voice source and the electronic device. Smaller M indicates a larger distance between the voice source and the electronic device. The electronic device may set an energy threshold H. When M is greater than or equal to H, it may be considered that the voice source is close to the electronic device (for example, within 40 cm). When M is less than H, it may be considered that the voice source is far from the electronic device (for example, beyond 40 cm). A mel frequency cepstral coefficient is a speech signal feature that conforms to an auditory characteristic of a human ear and more detailed features of the speech signal at a low frequency are captured. In addition, when the user speaks to the electronic device at a close distance, there may be a Pop sound at the low frequency. Therefore, the mel frequency cepstral coefficient, as input of the speech detection model, may help the speech detection model extract a speech parameter of the first speech signal in a low-frequency domain.

Step 308: The secondary wake-up free determining module processes the speech signal data by using the speech detection model to obtain a first confidence level, first speech data, and second speech data.

Specifically, the secondary wake-up free determining module may process the speech signal data by using the speech detection model to obtain the first confidence level, the first speech data, and the second speech data. The speech detection model may be a trained convolutional neural network. The convolutional neural network may include a convolutional layer and a fully connected layer.

The secondary wake-up free determining module processes the speech signal data by using the speech detection model. The convolutional layer of the speech detection model first processes the speech signal to obtain and output the first speech data. The first speech data includes high-order feature information of the mel frequency cepstral coefficient and high-order feature information of M. Then, the fully connected layer of the speech detection model processes the speech signal data processed by the convolutional layer to obtain the first confidence level and the second speech data. The second speech data includes high-order feature information of the mel frequency cepstral coefficient and high-order feature information of M. The first confidence level is used for representing a probability that the first speech signal is a speech instruction sent by the user to the electronic device.

Step 309: The secondary wake-up free determining module processes the pose information by using the pose detection model to obtain a second confidence level, first target pose information, and second target pose information.

Optionally, before processing the pose information by using the pose detection model, the secondary wake-up free determining module may acquire the acceleration data from the computer sensor. The acceleration data includes acceleration data of the electronic device on the x-axis, acceleration data of the electronic device on the y-axis, and acceleration data of the electronic device on the z-axis. Then, the pose information of the electronic device is obtained through calculation based on the acceleration data of the electronic device on these three coordinate axes. The pose information of the electronic device includes absolute values of the acceleration data corresponding to the three coordinate axes of x-axis, y-axis, and z-axis, may further include a variance d1 of the acceleration data corresponding to the x-axis, a variance d2 of the acceleration data corresponding to the y-axis, and a variance d3 of the acceleration data corresponding to the z-axis, may further include a mean value p1 of the acceleration data corresponding to the x-axis, a mean value p2 of the acceleration data corresponding to the y-axis, and a mean value p3 of the acceleration data corresponding to the z-axis, and may further include a difference value between d1 and p1, a difference value between d2 and p2, and a difference value between d3 and p3.

After obtaining the pose information, the secondary wake-up free determining module may detect the pose information by using the pose detection model to determine whether the electronic device is currently in a hand-held raised state, and may also determine data such as a shaking range of the electronic device in the hand-held raised state. The hand-held raised state may be understood as the user holding the electronic device in a hand. The electronic device may match a current application scenario in combination with the first confidence level and the pose information, and determine, based on the application scenario, whether the first speech signal is the speech instruction for waking up the speech assistant. The electronic device may process the pose information by using the pose detection model to obtain the second confidence level, the first target pose information, and the second target pose information.

The pose detection model may be a trained convolutional neural network model. The convolutional neural network model may include a convolutional layer and a fully connected layer. Because the absolute values of the acceleration data corresponding to the three coordinate axes of x-axis, y-axis, and z-axis as well as d1, d2, and d3 may represent whether the electronic device is in the motion state, p1, p2, and p3 may represent a motion range of the electronic device, and the difference value between d1 and p1, the difference value between d2 and p2, and the difference value between d3 and p3 may represent the motion state of the electronic device from another dimension such as motion smoothness. Therefore, the pose detection model may use the foregoing pose data to determine, based on a plurality of aspects such as whether the electronic device is moving, the motion range, and the motion smoothness, whether the electronic device is in the hand-held raised state, so that accuracy of determining of the pose detection model is improved.

The convolutional layer of the pose detection model may first process the pose information and output the first target pose information. The first target pose information includes high-order feature letter of the pose information. Then, the fully connected layer of the pose detection model processes the pose information processed by the convolutional layer to obtain the second confidence level and the second target pose information. The second target pose information includes the high-order feature information of the pose information. The second confidence level is used for representing a probability that the electronic device is in the hand-held raised state.

It should be understood that, step 308 may be performed before step 309, may be performed after step 309, or may be performed simultaneously with step 309. An execution order of step 308 and step 309 is not limited in this embodiment of this application.

Step 310: The secondary wake-up free determining module processes first audio data, second audio data, the first target pose information, and the second target pose information by using an audio-pose detection fusion model to obtain a third confidence level.

Specifically, the audio-pose detection fusion model may be a trained convolutional neural network model. The neural network model is configured to detect a probability that the first speech signal received by the electronic device is the speech instruction and that the electronic device is currently in the hand-held raised state. After the electronic device processes the first audio data, the second audio data, the first target pose information, and the second target pose information by using the audio-pose detection fusion model, the third confidence level is obtained. The third confidence level is used for representing the probability that the first speech signal is the speech instruction and that the electronic device is currently in the hand-held raised state. In other words, the third confidence level represents a matching degree between a pose state of the electronic device and the speech signal received by the electronic device. A higher third confidence level indicates a higher probability that the first speech signal is the speech instruction and the electronic device is currently in the hand-held raised state, in other words, indicates a higher real-time correlation between speech input of the electronic device and the electronic device being in the hand-held raised state.

Step 311: The secondary wake-up free determining module determines, based on the first confidence level, the second confidence level, and the third confidence level, whether the first speech signal is the target speech instruction.

Specifically, the target speech instruction is an instruction for waking up the speech assistant of the electronic device. If the electronic device determines that the first speech signal is the target speech instruction, step 312 is performed, otherwise, the process is ended.

There are two main methods for the electronic device to determine, based on the first confidence level, the second confidence level, and the third confidence level, whether the first speech signal is the target speech instruction.

A first method: The electronic device determines a first confidence identifier based on the first confidence level, determines a second confidence identifier based on the second confidence level, and determines a third confidence identifier based on the third confidence level. When the first confidence level is greater than or equal to a first confidence threshold, the first confidence identifier is 1. When the first confidence level is less than the first confidence threshold, the first confidence identifier is 0. When the second confidence level is greater than or equal to a second confidence threshold, the second confidence identifier is 1. When the second confidence level is less than the second confidence threshold, the second confidence identifier is 0. When the third confidence level is greater than or equal to a third confidence threshold, the third confidence identifier is 1. When the third confidence level is less than the third confidence threshold, the third confidence identifier is 0. Then, the electronic device performs an "AND logical (&)" operation on the first confidence identifier, the second confidence identifier, and the third confidence identifier to obtain the second determining result. If the second determining result is 1, the electronic device determines that the first speech signal is the target speech instruction. If the second determining result is 0, the electronic device determines that the first speech signal is not the target speech instruction. The first confidence threshold, the second confidence threshold, and the third confidence threshold may be obtained based on historical values, empirical values, or experimental data. This is not limited in embodiments of this application. Preferably, the first confidence threshold, the second confidence threshold, and the third confidence threshold may be 50%.

A second method: The electronic device may determine weight values of the first confidence level, second confidence level, and third confidence level by using formulas. Then, the electronic device performs fusion and calculation on the three confidence levels based on the weight values of the three confidence levels to obtain a fused confidence level, and then determines, based on the fused confidence level, whether the first speech signal is the target speech instruction.

For example, the electronic device may calculate the weight value of the first confidence level by using Formula (1). Formula (1) is as follows:

$$W_1 = \frac{[1/\mathrm{abs}(f_m - f_k)]}{\sum_{k=1}^{Q}[1/\mathrm{abs}(f_m - f_k)]} \qquad (1)$$

$f_m$ is a first confidence level output by the speech detection model this time, and k is a number of first Q first confidence levels close to the first confidence level output by the speech detection model this time. For example, when k=1, $f_k$ is a first confidence level output by the speech detection model last time, and when k=2, $f_k$ is a first confidence level output by the speech detection model the time before last, ...., and so on. abs is an absolute value function.

The electronic device may calculate the weight value of the second confidence level by using Formula (2). Formula (2) is as follows:

$$W_2 = \frac{[1/\mathrm{abs}(L_m - L_k)]}{\sum_{k=1}^{Q}[1/\mathrm{abs}(L_m - L_k)]} \qquad (2)$$

$L_m$ is a second confidence level output by the pose detection model this time, and k is a number of first Q second confidence levels close to the second confidence level output by the pose detection model this time. For example, when k=1, $f_k$ is a second confidence level output by the pose detection model last time, and when k=2, $f_k$ is a second confidence level output by the pose detection model the time before last, ...., and so on. abs is an absolute value function.

The electronic device may calculate the weight value of the third confidence level by using Formula (3). Formula (3) is as follows:

$$W_3 = 1 - W_1 - W_2 \qquad (3)$$

Then, the electronic device may calculate the fused confidence level K according to Formula (4). Formula (4) is as follows:

$$K = f_m \times W_1 + L_m \times W_2 + R_m \times W_3 \qquad (4)$$

K is the fused confidence level, and $R_m$ is a third confidence level output by the audio-pose detection fusion model this time. After calculating K, the electronic device determines whether K is greater than or equal to a first start threshold. If K is greater than the first start threshold, the electronic device determines that the first speech signal is the target speech instruction. Otherwise, the electronic device determines that the first speech signal is not the target speech instruction. Preferably, the first start threshold may be 60%.

Because the first confidence level is calculated by using the speech detection model, the second confidence level is calculated by using the pose detection model, and the third confidence level is calculated by using the audio-pose detection fusion model, an application scenario in which the electronic device only has the hand-held raised state may be excluded by using the first confidence level, an application scenario in which the electronic device only has speech input may be excluded by using the second confidence level, and the third confidence level combines high-dimensional features of speech information data and the pose information to represent a real-time correlation between speech input and a pose state of the electronic device. Therefore, whether the first speech signal is the target speech instruction is determined based on the first confidence level, the second confidence level, and the third confidence level, so that an obtained determining result is accurate.

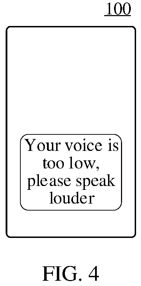

In a possible implementation, when it is determined, by using the second method, that the first speech signal is not the target speech instruction, the electronic device may further determine whether to display prompt information based on the calculated and fused confidence level. If K is less than the first confidence threshold and greater than or equal to the second confidence threshold (where the second confidence threshold is less than the first confidence threshold), the electronic device may display a prompt interface as shown in FIG. 4 to prompt the user of a problem that occurs when speech (for example, the voice is too low) is sent. In this way, the user can know the problem and make improvement in a timely manner without waking up the speech assistant. The first confidence threshold and the second confidence threshold may be obtained based on historical values, empirical values, or experimental data. This is not limited in embodiments of this application. Preferably, the second start threshold may be 50%.

Step 312: The secondary wake-up free determining module sends the first speech signal to the speech assistant module.

Step 313: The speech assistant module parses the first speech signal and performs a first operation based on the first speech signal.

Specifically, after the secondary wake-up free determining module sends the first speech signal to the speech assistant module, the speech assistant module receives and parses the first speech signal to acquire an operation instruction, and performs the first operation based on the operation instruction.

For example, speech sent by the user to the electronic device is "Open the camera application, I want to take a photo", and the speech assistant module parses a first speech signal corresponding to the speech and may extract an instruction of "Open the camera application". Therefore, the speech assistant module may start the camera application based on the instruction, and an operation of the speech assistant module starting the camera application is the first operation.

In this embodiment of this application, after receiving a speech signal, the electronic device first determines whether speech detection needs to be performed on the speech signal by using the primary wake-up free determining module. For a speech signal on which speech detection does not need to be performed, the process is ended and the speech signal can no longer be processed. The speech signal is determined by the primary wake-up free determining module, so that most scenarios that are not intended by the user are filtered out, thereby avoiding wake-up free of the speech assistant in the electronic device and reducing computing resources of the electronic device. If the electronic device determines that speech detection needs to be performed on the speech signal, the electronic device processes speech signal data of the speech signal by using the speech detection model, processes pose information by using the pose detection module, and processes high-order feature data output by the pose detection module and the speech detection model by using an audio-pose monitoring model. These three models output three confidence levels respectively, and then the electronic device determines, based on the three confidence levels, whether the received speech signal is a target speech instruction for waking up a speech assistant. If the received speech signal is the target speech instruction for waking up the speech assistant, the speech assistant is woken up. If the received speech signal is not the target speech instruction for waking up the speech assistant, the speech assistant is not woken up. Because the first confidence level is calculated by using the speech detection model, the second confidence level is calculated by using the pose detection model, and the third confidence level is calculated by using the audio-pose detection fusion model, an application scenario in which the electronic device only has the hand-held raised state may be excluded by using the first confidence level, an application scenario in which the electronic device only has speech input may be excluded by using the second confidence level, and the third confidence level combines high-dimensional features of speech information data and the pose information to represent a real-time correlation between speech input and a pose state of the electronic device. Therefore, whether the first speech signal is the target speech instruction is determined based on the first confidence level, the second confidence level, and the third confidence level, so that an obtained determining result is accurate. This can reduce a probability of the speech assistant being woken up by mistake and improve user experience.

The process of the speech interaction method provided in this embodiment of this application is described in the foregoing embodiment of FIG. 3A and FIG. 3B. Another speech interaction method provided in embodiments of this application is described below with reference to the accompanying drawings. In the method, after a wake-up free determining module determines that a first speech signal is a target speech instruction, the wake-up free determining module sends the first speech signal to a voiceprint identification module. The voiceprint identification module sends the first speech signal to a speech assistant module only after determining that the first speech signal is a speech signal issued by a user. According to the method, only a user of an electronic device can wake up a speech assistant. This ensures privacy and security of the user while preventing the speech assistant from being triggered by mistake.

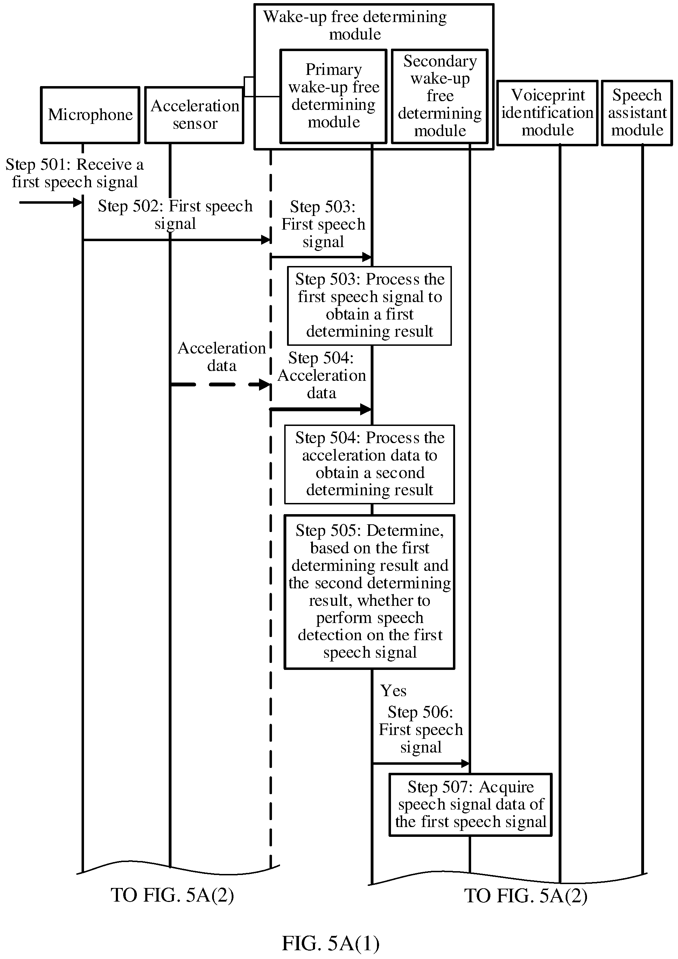

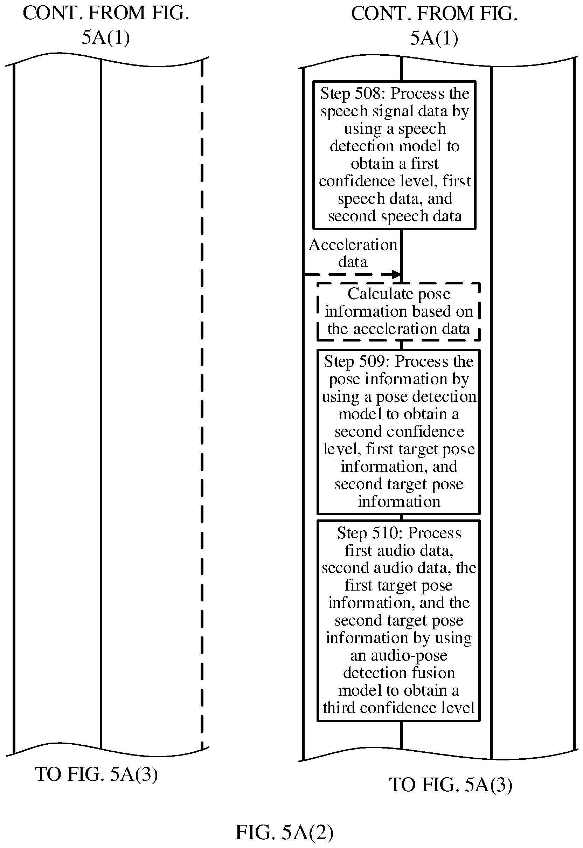

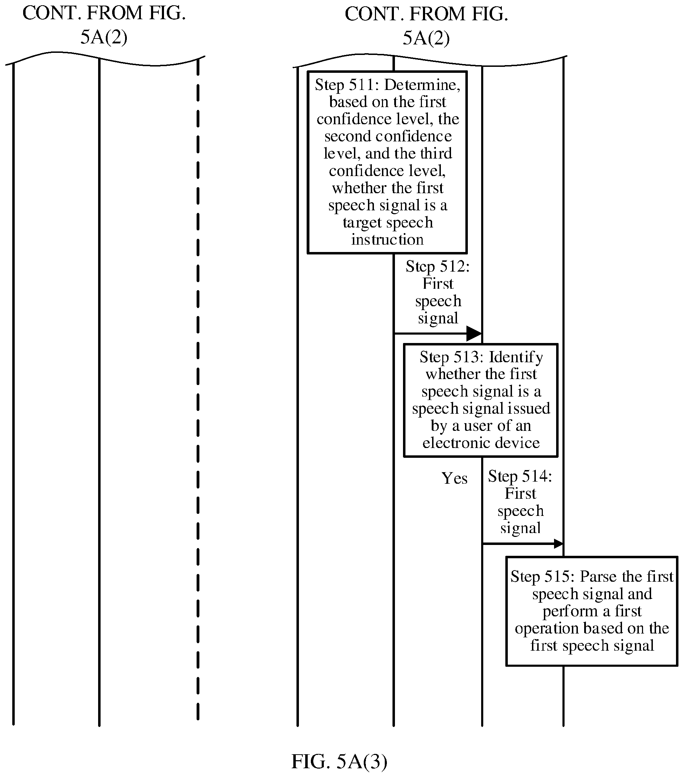

Another speech interaction method provided in embodiments of this application is described below with reference to FIG. 5A(1) to FIG 5A(3). FIG. 5A(1) to FIG 5A(3) are a flowchart of another speech interaction method according to an embodiment of this application. A specific process is as follows:

Step 501: An electronic device receives a first speech signal.
Step 502: The electronic device sends the first speech signal to the wake-up free determining module.
Step 503: The wake-up free determining module processes the first speech signal by using a primary wake-up free determining module to obtain a first determining result.
Step 504: A wake-up determining module processes acceleration data by using the primary wake-up free determining module to obtain a second determining result.
Step 505: The primary wake-up free determining module determines, based on the first determining result and the second determining result, whether to perform speech detection on the first speech signal.
Step 506: The primary wake-up free determining module sends the first speech signal to a secondary wake-up free determining module.
Step 507: The secondary wake-up free module acquires speech signal data of the first speech signal.
Step 508: The secondary wake-up free determining module processes the speech signal data by using a speech detection model to obtain a first confidence level, first speech data, and second speech data.
Step 509: The secondary wake-up free determining module processes pose information by using a pose detection model to obtain a second confidence level, first target pose information, and second target pose information.
Step 510: The secondary wake-up free determining module processes first audio data, second audio data, the first target pose information, and the second target pose information by using an audio-pose detection fusion model to obtain a third confidence level.
Step 511: The secondary wake-up free determining module determines, based on the first confidence level, the second confidence level, and the third confidence level, whether the first speech signal is a target speech instruction.

If the first speech signal is the target speech instruction, step 512 is performed. If the first speech signal is not the target speech instruction, the process is ended.

For step 501 to step 511, refer to step 301 to step 311 in the embodiment of FIG. 3A and FIG. 3B. Details are not described herein again.

Step 512: The secondary wake-up free determining module sends the first speech signal to a voiceprint identification module.

Step 513: The voiceprint identification module identifies whether the first speech signal is a speech signal issued by a user of the electronic device.

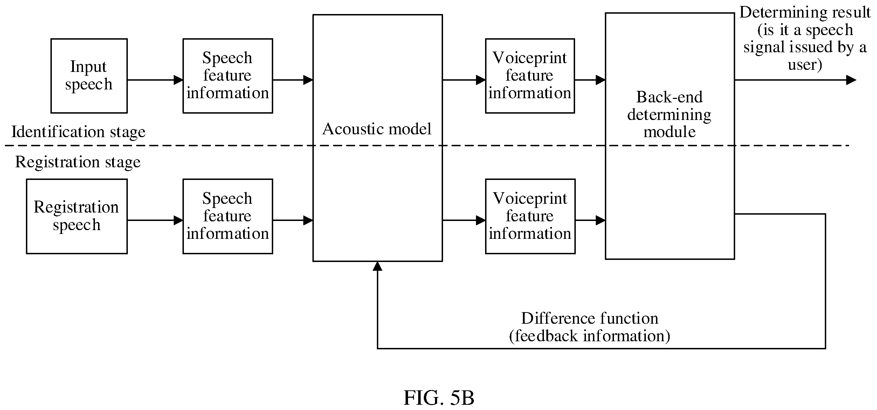

Specifically, the voiceprint identification module may be a trained neural network model. As shown in FIG. 5B, a user may enter registration speech based on a prompt of the electronic device, for example, speaking to the electronic device "I look really good today", "Play today's news", and the like. The electronic device may extract speech feature information (for example, a frequency of a speech signal, loudness of a voice, and pitch and timbre of the voice) based on the registration speech entered by the user, and use the extracted speech feature information as input of an acoustic model. The acoustic model processes the speech feature information, outputs voiceprint feature information of the user, and uses the voiceprint feature information as input of a back-end determining module. The back-end determining module processes the voiceprint feature information and outputs a difference function. The difference function is used for measuring a difference between voiceprint feature information output by the acoustic model and real voiceprint feature information of the user. A greater difference function indicates a greater difference, and a smaller difference function indicates a smaller difference. Then, the electronic device adjusts a network structure or parameter of the acoustic model based on the difference function, so that the voiceprint feature information output by the acoustic model is infinitely close to the voiceprint feature information of the user. The voiceprint feature information is used for representing an element of the voice of the user, which may include pitch, timbre, loudness, and the like of the voice of the user.

After receiving the first speech signal (input speech), the voiceprint identification module may extract speech feature information from the first speech signal and use the speech feature information as input of the acoustic model. The acoustic model processes the speech feature information, outputs voiceprint feature information corresponding to the first speech signal, and uses the voiceprint feature information as input of the back-end determining module. The back-end determining module determines whether the voiceprint feature information is consistent with the voiceprint feature information of the user. If the voiceprint feature information is consistent with the voiceprint feature information of the user, step 515 is performed. If the voiceprint feature information is not consistent with the voiceprint feature information of the user, the process is ended.

Step 514: The voiceprint identification module sends the first speech signal to a speech assistant module.

Step 515: The speech assistant module parses the first speech signal and performs a first operation based on the first speech signal.

For step 515, refer to step 313 in the embodiment of FIG. 3A and FIG. 3B. Details are not described herein again.

It should be noted that, for the foregoing method embodiments, for ease of description, the method embodiments

EP 4 528 722 A1

are described as a series of action combinations. But a person skilled in the art should know that the present invention is not limited to any described sequence of the actions. In addition, a person skilled in the art should also know that all embodiments described in the specification are preferred embodiments, and the related actions are not necessarily mandatory to the present invention.

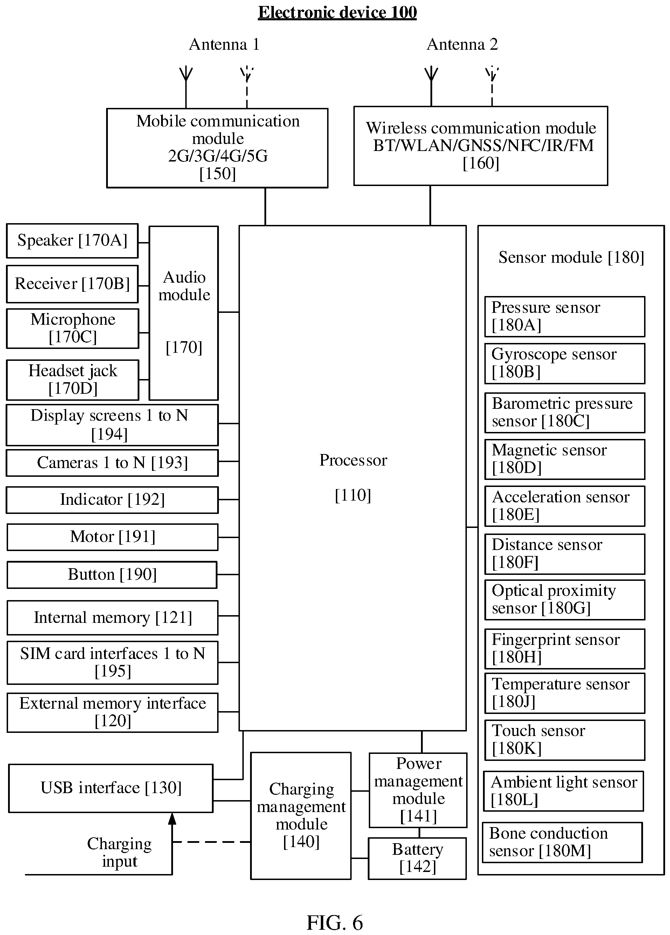

A structure of an electronic device 100 is described below. FIG. 6 is a schematic diagram of a hardware structure of the electronic device 100 according to an embodiment of this application.

The electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display screen 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that an example structure in this embodiment of the present invention does not constitute a specific limitation on the electronic device 100. In some other embodiments of this application, the electronic device 100 may include more or fewer components than those shown in FIG. 6, some components may be combined, some components may be split, or different component arrangements may be used. The components shown in FIG. 6 may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be separate components, or may be integrated into one or more processors.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna of the electronic device 100 may be configured to cover one or more communication frequency bands. Different antennas may be further reused to improve utilization of the antennas. For example, the antenna 1 may be reused as a diversity antenna of a wireless local area network. In some other embodiments, the antennas may be used with a tuning switch.

The mobile communication module 150 may provide a solution applied to the electronic device 100 for wireless communication such as 2G/3G/4G/5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal obtained after modulation by the modem processor, and convert the signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in the same component as at least some modules of the processor 110.

The wireless communication module 160 may provide a solution applied to the electronic device 100 for wireless communication including a wireless local area network (wireless local area networks, WLAN) (for example, a Wi-Fi network), Bluetooth (Bluetooth, BT), BLE broadcasting, a global navigation satellite system (global navigation satellite system, GNSS), frequency modulation (frequency modulation, FM), near field communication (near field communication, NFC), an infrared technology (infrared, IR), and the like. The wireless communication module 160 may be one or more components integrating at least one communication processing module. The wireless communication module 160 receives an electromagnetic wave through the antenna 2, performs frequency modulation and filtering on the electromagnetic wave signal, and sends the processed signal to the processor 110. The wireless communication module 160 may further receive a to-be-sent signal from the processor 110, and perform frequency modulation and amplification on the signal. The signal is converted into an electromagnetic wave through the antenna 2 for radiation.

The electronic device 100 implements a display function by using the GPU, the display screen 194, the application processor, and the like. The GPU is a microprocessor for image processing and is connected to the display screen 194 and the application processor. The GPU is configured to perform mathematical and geometric calculation for graphics rendering. The processor 110 may include one or more GPUs that execute program instructions to generate or change display information.

The display screen 194 is configured to display an image, a video, and the like. The display screen 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a Miniled, a MicroLed, a Micro-oLed, quantum dot light emitting diodes (quantum dot light emitting diodes, QLED), or the like. In some embodiments, the electronic device 100 may include 1 or N display screens 194. N is a positive integer greater than 1.

The electronic device 100 may implement a photographing function by using the ISP, the camera 193, the video codec, the GPU, the display screen 194, the application processor, and the like.

The ISP is configured to process data fed back by the camera 193. For example, during photographing, a shutter is enabled. Light is transferred to a camera photosensitive element through a lens, and an optical signal is converted into an electrical signal. The camera photosensitive element transfers the electrical signal to the ISP for processing, so that the electrical signal is converted into an image visible to naked eyes. The ISP may further perform algorithm optimization on noise, brightness, and a skin tone of the image. The ISP may further optimize a parameter such as exposure and color temperature of a photographed scene. In some embodiments, the ISP may be disposed in the camera 193.

The digital signal processor is configured to process a digital signal, and in addition to a digital image signal, the digital signal processor may further process another digital signal. For example, when the electronic device 100 performs frequency selection, the digital signal processor is configured to perform Fourier transform and the like on frequency energy.

The NPU is a neural-network (neural-network, NN) computing processor, quickly processes input information by using a structure of a biological neural network, for example, a transmission mode between neurons in a human brain, and may further constantly perform self-learning. The NPU may be used to implement an application such as intelligent cognition of the electronic device 100, for example, image recognition, facial recognition, speech recognition, and text understanding.

The electronic device 100 may implement an audio function by using the audio module 170, the speaker 170A, the telephone receiver 170B, the microphone 170C, the headset jack 170D, the application processor, and the like, for example, implement music playback, recording, and the like.

The audio module 170 is configured to convert digital audio information into analog audio signal output, and is further configured to convert analog audio input into a digital audio signal. The audio module 170 may be further configured to encode and decode an audio signal. In some embodiments, the audio module 170 may be disposed in the processor 110, or some functional modules in the audio module 170 may be disposed in the processor 110.

The speaker 170A, also referred to as a "loudspeaker", is configured to convert an audio electrical signal into a sound signal. The electronic device 100 may be configured to listen to music or answer a call in a hands-free mode by using the speaker 170A.

The receiver 170B, also referred to as a "handset", is configured to convert an electrical audio signal into a sound signal. When the electronic device 100 is configured to answer a call or receive speech information, the receiver 170B may be put close to a human ear to answer speech.

The microphone 170C, also referred to as a "mic" or "mike", is configured to convert a sound signal into an electrical signal. When making a call or sending speech information, a user may make a sound approaching the microphone 170C through the mouth, to input a sound signal into the microphone 170C. At least one microphone 170C may be disposed in the electronic device 100. In some other embodiments, two microphones 170C may be disposed in the electronic device 100, to collect a sound signal and implement a noise reduction function. In some other embodiments, three, four, or more microphones 170C may be alternatively disposed in the electronic device 100, to collect a sound signal, implement noise reduction, recognize a sound source, implement a directional recording function, and the like.

The pressure sensor 180A is configured to sense a pressure signal, and may convert the pressure signal into an electrical signal. In some embodiments, the pressure sensor 180A may be disposed on the display screen 194.

The barometric pressure sensor 180C is configured to measure barometric pressure. In some embodiments, the electronic device 100 calculates an altitude by using a barometric pressure value measured by the barometric pressure sensor 180C, to assist in positioning and navigation.

The magnetic sensor 180D may include a Hall sensor. The electronic device 100 may detect an opening state or a closing state of a flip leather case by using the magnetic sensor 180D.

The acceleration sensor 180E may detect an acceleration value of the electronic device 100 in all directions (generally three axes). When the electronic device 100 is still, a magnitude and a direction of gravity may be detected. The acceleration sensor 180E may be further configured to recognize a posture of the electronic device, and is applied to applications such as switchover between horizontal and vertical screens and a pedometer.

The fingerprint sensor 180H is configured to collect a fingerprint. The electronic device 100 may implement fingerprint unlock, application lock accessing, fingerprint photographing, fingerprint-based call answering, and the like by using a feature of the collected fingerprint.

The touch sensor 180K is also referred to as a "touch panel". The touch sensor 180K may be disposed on the display screen 194. The touch sensor 180K and the display screen 194 form a touchscreen, also referred to as a "touch screen". The touch sensor 180K is configured to detect a touch operation performed on or near the touch sensor 180K. The touch sensor may transfer the detected touch operation to the application processor to determine a type of a touch event. Visual output related to the touch operation may be provided by using the display screen 194. In some other embodiments, the touch sensor 180K may be alternatively disposed on a surface of the electronic device 100 in a position different from that of the display screen 194.

The bone conduction sensor 180M may acquire a vibration signal. In some embodiments, the bone conduction sensor 180M may acquire a vibration signal of a vibrating bone block of a human body's vocal part.

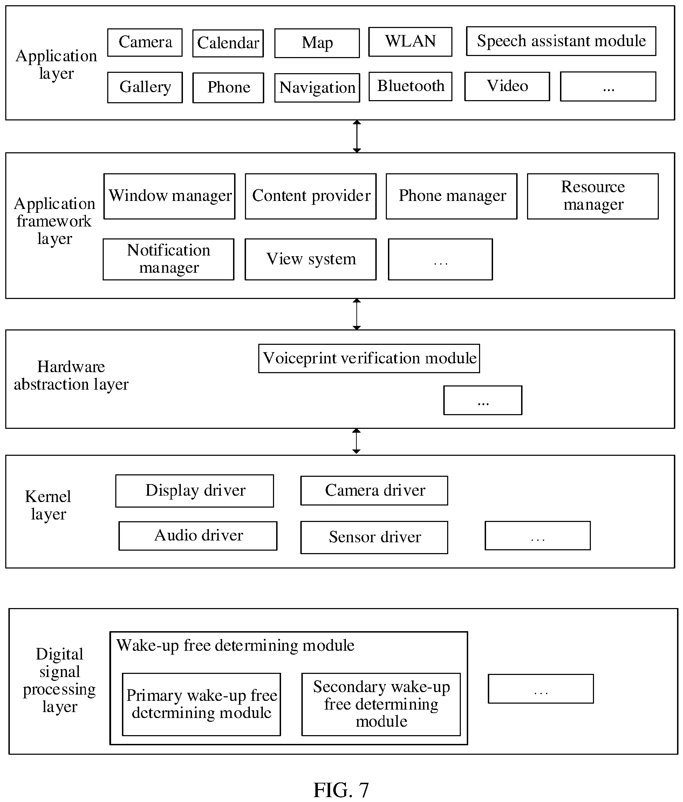

A software system of the electronic device 100 may use a layered architecture, an event-driven architecture, a microkernel architecture, a micro service architecture, or a cloud architecture. In this embodiment of the present invention, an Android system with a layered architecture is used as an example to describe a software structure of the electronic device 100. FIG. 7 is a block diagram of a software structure of the electronic device 100 according to an embodiment of this application. In a layered architecture, software is divided into several layers, and each layer has a clear role and task. The layers communicate with each other through software interfaces. In some embodiments, the Android system is divided into four layers that are respectively an application layer, an application framework layer, a hardware abstraction layer (HAL layer), a kernel layer, and a digital signal processing layer.

The application layer may include a series of application packages. As shown in FIG. 7, the application packages may include applications such as Camera, Gallery, Calendar, Phone, Map, Navigation, WLAN, Bluetooth, a speech assistant module, and Video.

The speech assistant module is configured to parse a speech instruction of a user and perform a related operation based on the speech instruction of the user, to implement speech interaction between the electronic device and the user.

The application framework layer provides an application programming interface (application programming interface, API) and a programming framework for applications at the application layer. The application framework layer includes some predefined functions. As shown in FIG. 7, the application framework layer may include a window manager, a content provider, a view system, a phone manager, a resource manager, a notification manager, and the like.

The window manager is configured to manage a window application. The window manager may acquire a size of a display screen, determine whether there is a status bar, perform screen locking, perform screen capturing, and the like.

The content provider is configured to store and acquire data and enable the data to be accessible by an application. The data may include a video, an image, audio, phone calls made and answered, a browsing history, favorites, an address book, and the like.

The view system includes a visual control, for example, a control for displaying text or a control for displaying a picture. The view system may be configured to create an application. A display interface may include one or more views. For example, a display interface including a text message notification icon may include a view for displaying text and a view for displaying a picture.

The phone manager is configured to provide a communication function of the electronic device 100, for example, call state management (including getting through, hang-up, and the like).

The resource manager provides an application with a variety of resources, such as a localized character string, an icon, a picture, a layout file, a video file, and the like.

The notification manager enables an application to display a notification information in a status bar. The notification information may be used for conveying an informative message that may disappear automatically after a short period of time without user interaction. For example, the notification manager is used for informing completion of downloading, providing a message reminder, and the like. The notification manager may alternatively provide, on a status bar at the top of the system, a notification in the form of a chart or scroll bar text, for example, a notification of an application running in the background, or provide, on a screen, a notification in the form of a dialog window. For example, text information is prompted in the status bar, a prompt tone is generated, the electronic device vibrates, and an indicator light blinks.

The hardware abstraction layer includes a voiceprint identification module. The voiceprint identification module is configured to determine whether a received speech signal is a speech signal issued by a user.

The kernel layer is a layer between hardware and software. The kernel layer includes at least a display driver, a camera driver, an audio driver, and a sensor driver.

The digital signal processing layer includes a wake-up free determining module. The wake-up free determining module is configured to determine whether a received speech signal is a speech signal for waking up a speech assistant in the electronic device.

It should be noted that, for the foregoing method embodiments, for ease of description, the method embodiments are described as a series of action combinations. But a person skilled in the art should know that the present invention is not limited to any described sequence of the actions. In addition, a person skilled in the art should also know that all embodiments described in the specification are preferred embodiments, and the related actions are not necessarily mandatory to the present invention. The implementations of this application may be combined arbitrarily to achieve different technical effects.

All or some of the foregoing embodiments may be implemented by using software, hardware, firmware, or any combination thereof. When software is used to implement the embodiments, all or some of the embodiments may be implemented in the form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk)), or the like.

A person of ordinary skill in the art may understand that all or some of the procedures in the methods in the foregoing embodiments may be implemented by using a computer program instructing related hardware. The program may be stored in a computer-readable storage medium. When the program is executed, the procedures in the foregoing method embodiments may be performed. The foregoing storage medium includes any medium that can store program code, such as a ROM, a random access memory RAM, a magnetic disk, or an optical disc.

In conclusion, the foregoing descriptions are merely examples of embodiments of the technical solutions of the present invention, but are not intended to limit the protection scope of the present invention. Any modification, equivalent replacement, improvement, and the like made based on the disclosure of the present invention shall fall within the protection scope of the present invention.

## Claims

1.  A speech interaction method, applied to an electronic device, wherein the electronic device comprises a speech interaction application, and the method comprises:

    receiving a first speech signal;
    obtaining speech signal data based on the first speech signal when it is determined that speech detection is to be performed on the first speech signal;
    processing the speech signal data by using a speech detection model to obtain a first confidence level and speech data, wherein the first confidence level is used for representing a probability that the first speech signal is a speech instruction sent by a user to the electronic device;
    acquiring acceleration data of the electronic device, and obtaining pose information of the electronic device based on the acceleration data;
    processing the pose information by using a pose detection model to obtain a second confidence level and target pose information, wherein the second confidence level is used for representing a probability that the electronic device is in a hand-held raised state;
    processing the target pose information and the speech data by using an audio-pose detection fusion model to obtain a third confidence level, wherein the third confidence level is used for representing a probability that the electronic device is in a hand-held raised state and the first speech signal is a speech instruction sent by a user to the electronic device; and
    determining, based on the first confidence level, the second confidence level, and the third confidence level, whether to start the speech interaction application.

2.  The method according to claim 1, wherein the determining, based on the first confidence level, the second confidence level, and the third confidence level, whether to start the speech interaction application specifically comprises:

    setting a first confidence identifier to 1 when the first confidence level is greater than or equal to a first confidence threshold;

setting the first confidence identifier to 0 when the first confidence level is less than the first confidence threshold;

setting a second confidence identifier to 1 when the second confidence level is greater than or equal to a second confidence threshold;

setting the second confidence identifier to 0 when the second confidence level is less than the second confidence threshold;

setting a third confidence identifier to 1 when the third confidence level is greater than or equal to a third confidence threshold;

setting the third confidence identifier to 0 when the third confidence level is less than the third confidence threshold;

performing an AND logical operation on the first confidence identifier, the second confidence identifier, and the third confidence identifier to obtain a determining result; and

determining, based on the determining result, whether to start the speech interaction application.

3. The method according to claim 2, wherein the determining, based on the determining result, whether to start the speech interaction application specifically comprises:

starting the speech interaction application when the determining result is 1; or
skipping starting the speech interaction application when the determining result is 0.

4. The method according to claim 2, wherein the electronic device further comprises a voiceprint detection module, and the determining, based on the determining result, whether to start the speech interaction application specifically comprises:

skipping starting the speech interaction application when the determining result is 0; or
when the determining result is 1, detecting whether the first speech signal is a voice of a target user by using the voiceprint detection module, wherein the target user is a user of the electronic device;
starting the speech interaction application if the first speech signal is the speech of the target user; or
skipping starting the speech interaction application if the first speech signal is not the speech of the target user.

5. The method according to claim 1, wherein the determining, based on the first confidence level, the second confidence level, and the third confidence level, whether to start the speech interaction application specifically comprises:

calculating a first weight value of the first confidence level, a second weight value of the second confidence level, and a third weight value of the third confidence level;
performing calculation, based on the first confidence level, the first weight value, the second confidence level, the second weight value, the third confidence level, and the third weight value, to obtain a fused confidence level; and
determining, based on the fused confidence level, whether to start the speech interaction application.

6. The method according to claim 5, wherein the calculating a first weight value of the first confidence level, a second weight value of the second confidence level, and a third weight value of the third confidence level specifically comprises:

calculating the first weight value according to a formula $W_1 = \dfrac{[1/abs(f_m - f_k)]}{\sum_{k=1}^{Q}[1/abs(f_m - f_k)]}$, wherein $W_1$ is the first weight value, abs is an absolute value function, $f_m$ is a first confidence level output by the speech detection model this time, and k is a number of first Q first confidence levels closest to the first confidence level output this time;

calculating the second weight value according to a formula $W_2 = \dfrac{[1/abs(L_m - L_k)]}{\sum_{k=1}^{Q}[1/abs(L_m - L_k)]}$, wherein $W_2$ is the second weight value, $L_m$ is a second confidence level output by the pose detection model this time, and k is a number of first Q second confidence levels closest to the second confidence level output this time; and

calculating the third weight value according to a formula $W_3 = 1 - W_1 - W_2$, wherein $W_3$ is the third weight value.

7. The method according to claim 6, wherein the performing calculation, based on the first confidence level, the first weight value, the second confidence level, the second weight value, the third confidence level, and the third weight value, to obtain a fused confidence level specifically comprises:

calculating the fused confidence level according to a formula $K = f_m \times W_1 + L_m \times W_2 + R_m \times W_3$, wherein K is the fused confidence level, and $R_m$ is the third confidence level.

8. The method according to any one of claims 5 to 7, wherein the determining, based on the fused confidence level, whether to start the speech interaction application specifically comprises:

starting the speech interaction application if the fused confidence level is greater than or equal to a first start threshold; or
skipping starting the speech interaction application if the fused confidence level is less than a first start threshold.

9. The method according to claim 8, wherein the electronic device comprises a display screen, and if the fused confidence level is less than the first start threshold and greater than or equal to a second start threshold, prompt information is displayed on the display screen, and the prompt information indicates the user to reissue a speech instruction; and the second start threshold is less than the first start threshold.

10. The method according to any one of claims 5 to 7, wherein the electronic device further comprises a voiceprint detection module, and the determining, based on the fused confidence level, whether to start the speech interaction application specifically comprises:

skipping starting the speech interaction application if the fused confidence level is less than a first start threshold; or
if the fused confidence level is greater than or equal to a first start threshold, detecting whether the first speech signal is a voice of a target user by using the voiceprint detection module, wherein the target user is a user of the electronic device;
starting the speech interaction application if the first speech signal is the speech of the target user; or
skipping starting the speech interaction application if the first speech signal is not the speech of the target user.

11. The method according to any one of claims 1 to 10, wherein before the obtaining speech signal data based on the first speech signal, the method further comprises:

acquiring a signal strength value of the speech signal, an acceleration variance D1 of the electronic device on an x-axis, an acceleration variance D2 of the electronic device on a y-axis, and an acceleration variance D3 of the electronic device on a z-axis; and
determining, based on the signal strength value, D1, D2 and D3, whether speech detection needs to be performed on the first speech signal.

12. The method according to any one of claims 1 to 11, wherein the speech data comprises first speech data and second speech data, the first speech data is high-order speech feature information output by a convolutional layer of the speech detection model, and the second speech data is high-order speech feature information output by a fully connected layer of the speech detection model; and
the target pose information comprises first target pose information and second target pose information, the first target pose information is high-order speech feature information output by a convolutional layer of the pose detection model, and the second target pose information is high-order speech feature information output by a fully connected layer of the pose detection model.

13. An electronic device, comprising: a memory, a processor, and a touch screen, wherein

the touch screen is configured to display content;
the memory is configured to store a computer program, and the computer program comprises program instructions; and
the processor is configured to invoke the program instructions to enable the electronic device to perform the method according to any one of claims 1 to 12.

14. A computer-readable storage medium, wherein the computer-readable storage medium stores a computer program, and when the computer program is executed by a processor, the method according to any one of claims 1 to 12 is implemented.

100

Speech assistant, open the music application

FIG. 1A

100

Delacey

00:42    04:42

FIG. 1B

100

Speech assistant, query the meaning of Qu Gao He Gua

**FIG. 1C**

100

Qu Gao He Gua: A metaphor for speech or work that is unpopular and can be accepted by few people

**FIG. 1D**

100

Open the
music
application

FIG. 1E

100

← 

Monday

00:42      04:42
⇒

FIG. 1F

<u>100</u>

Issue an instruction 2
to 5 centimeters away
from a microphone at
the bottom of a phone

101

Speech
wake-up free

FIG. 1G

Speech assistant
module

First
speech
signal

Wake-up free
determining module

Primary wake-up free
determining module

First speech signal

Secondary wake-up
free determining
module

Acceleration
data

First speech
signal

FIG. 2

Wake-up free determining module

| Microphone | Acceleration sensor | Primary wake-up free determining module | Secondary wake-up free determining module | Speech assistant module |

Step 301: Receive a first speech signal

Step 302: First speech signal

Step 303: First speech signal

Step 303: Process the first speech signal to obtain a first determining result

Acceleration data

Acceleration data

Step 304: Acceleration data

Step 304: Process the acceleration data to obtain a second determining result

Step 305: Determine, based on the first determining result and the second determining result, whether to perform speech detection on the first speech signal

Yes

Step 306: First speech signal

Step 307: Acquire speech signal data of the first speech signal

TO FIG. 3B                    TO FIG. 3B

FIG. 3A

CONT. FROM FIG.
3A

CONT. FROM FIG.
3A

Step 308: Process the speech signal data by using a speech detection model to obtain a first confidence level, first speech data, and second speech data

Acceleration data

Calculate pose information based on the acceleration data

Step 309: Process the pose information by using a pose detection model to obtain a second confidence level, first target pose information, and second target pose information

Step 310: Process first audio data, second audio data, the first target pose information, and the second target pose information by using an audio-pose detection fusion model to obtain a third confidence level

Step 311: Determine, based on the first confidence level, the second confidence level, and the third confidence level, whether the first speech signal is a target speech instruction

Yes
Step 312: First speech signal

Step 313: Parse the first speech signal and perform a first operation based on the first speech signal

FIG. 3B

<u>100</u>

Your voice is
too low,
please speak
louder

FIG. 4

Wake-up free determining module

| Microphone | Acceleration sensor | Primary wake-up free determining module | Secondary wake-up free determining module | Voiceprint identification module | Speech assistant module |

Step 501: Receive a first speech signal

Step 502: First speech signal

Step 503: First speech signal

Step 503: Process the first speech signal to obtain a first determining result

Acceleration data

Step 504: Acceleration data

Step 504: Process the acceleration data to obtain a second determining result

Step 505: Determine, based on the first determining result and the second determining result, whether to perform speech detection on the first speech signal

Yes

Step 506: First speech signal

Step 507: Acquire speech signal data of the first speech signal

TO FIG. 5A(2)          TO FIG. 5A(2)

FIG. 5A(1)

CONT. FROM FIG.
5A(1)

CONT. FROM FIG.
5A(1)

Step 508: Process the speech signal data by using a speech detection model to obtain a first confidence level, first speech data, and second speech data

Acceleration data

Calculate pose information based on the acceleration data

Step 509: Process the pose information by using a pose detection model to obtain a second confidence level, first target pose information, and second target pose information

Step 510: Process first audio data, second audio data, the first target pose information, and the second target pose information by using an audio-pose detection fusion model to obtain a third confidence level

TO FIG. 5A(3)

TO FIG. 5A(3)

FIG. 5A(2)

CONT. FROM FIG.
5A(2)

CONT. FROM FIG.
5A(2)

Step 511: Determine, based on the first confidence level, the second confidence level, and the third confidence level, whether the first speech signal is a target speech instruction

Step 512: First speech signal

Step 513: Identify whether the first speech signal is a speech signal issued by a user of an electronic device

Yes     Step 514: First speech signal

Step 515: Parse the first speech signal and perform a first operation based on the first speech signal

FIG. 5A(3)

Determining result
(is it a speech
signal issued by a
user)

```
┌──────────┐      ┌──────────┐                        ┌──────────┐
│  Input   │      │  Speech  │                        │Voiceprint│
│  speech  │─────▶│ feature  │────────▶┌─────────┐───▶│ feature  │────▶┌──────────┐────▶
└──────────┘      │information│         │         │    │information│    │ Back-end │
                  └──────────┘         │ Acoustic │    └──────────┘    │determining│
Identification stage                   │  model   │                    │  module  │
- - - - - - - - - - - - - - - - - - - -│          │- - - - - - - - - - - - - - - - -│
Registration stage                     │          │                    │          │
┌──────────┐      ┌──────────┐         │          │    ┌──────────┐    │          │
│Registration│    │  Speech  │         │         │    │Voiceprint│    │          │
│  speech  │─────▶│ feature  │────────▶│         │───▶│ feature  │────▶│          │
└──────────┘      │information│         └─────────┘    │information│    └──────────┘
                  └──────────┘                         └──────────┘
```

Difference function
(feedback information)

FIG. 5B

## Electronic device 100

Antenna 1          Antenna 2

| Mobile communication module 2G/3G/4G/5G [150] | Wireless communication module BT/WLAN/GNSS/NFC/IR/FM [160] |

| Speaker [170A] | Audio module [170] | Processor [110] | Sensor module [180] |
| Receiver [170B] | | | Pressure sensor [180A] |
| Microphone [170C] | | | Gyroscope sensor [180B] |
| Headset jack [170D] | | | Barometric pressure sensor [180C] |
| Display screens 1 to N [194] | | | Magnetic sensor [180D] |
| Cameras 1 to N [193] | | | Acceleration sensor [180E] |
| Indicator [192] | | | Distance sensor [180F] |
| Motor [191] | | | Optical proximity sensor [180G] |
| Button [190] | | | Fingerprint sensor [180H] |
| Internal memory [121] | | | Temperature sensor [180J] |
| SIM card interfaces 1 to N [195] | | | Touch sensor [180K] |
| External memory interface [120] | | | Ambient light sensor [180L] |

USB interface [130]

Charging input

Charging management module [140]

Power management module [141]

Battery [142]

Bone conduction sensor [180M]

FIG. 6

| Application layer | Camera | Calendar | Map | WLAN | Speech assistant module |
|---|---|---|---|---|---|
| | Gallery | Phone | Navigation | Bluetooth | Video | ... |

| Application framework layer | Window manager | Content provider | Phone manager | Resource manager |
|---|---|---|---|---|
| | Notification manager | View system | ... | |

**Hardware abstraction layer**

Voiceprint verification module

...

**Kernel layer**

| Display driver | Camera driver |
|---|---|
| Audio driver | Sensor driver | ... |

**Digital signal processing layer**

Wake-up free determining module

| Primary wake-up free determining module | Secondary wake-up free determining module | ... |
|---|---|---|

FIG. 7

## INTERNATIONAL SEARCH REPORT

| International application No. |
| --- |
| **PCT/CN2023/117410** |

**A. CLASSIFICATION OF SUBJECT MATTER**

G10L15/22(2006.01)i

According to International Patent Classification (IPC) or to both national classification and IPC

**B. FIELDS SEARCHED**

Minimum documentation searched (classification system followed by classification symbols)

IPC:G10L

Documentation searched other than minimum documentation to the extent that such documents are included in the fields searched

Electronic data base consulted during the international search (name of data base and, where practicable, search terms used)

CNABS, CNTXT, CNKI: 语音, 音频, 交互, 识别, 语音活动检测, 语音检测模型, 第一置信度, 概率, 加速度, 位姿, 位姿检测模型, 手持, 抬起, 融合, 阈值, 置信标识, 声纹, 权重, 信号强度, 音量, 卷积层; VEN, USTXT, WOTXT, JPTXT, EPTXT, ELSEVIER: voice, audio, interaction, recognition, voice activity detection, speech detection model, first confidence, probability, acceleration, position figure, pose detection model, hand held, lift, fusion, threshold, confidence indicator, voiceprint, weight, signal strength, volume, convolutional layer

**C. DOCUMENTS CONSIDERED TO BE RELEVANT**

| Category* | Citation of document, with indication, where appropriate, of the relevant passages | Relevant to claim No. |
| --- | --- | --- |
| PX | CN 115881118 A (HONOR TERMINAL CO., LTD.) 31 March 2023 (2023-03-31) <br> claims 1-14 | 1-14 |
| Y | US 10515623 B1 (AMAZON TECHNOLOGIES INC.) 24 December 2019 (2019-12-24) <br> description, column 21, lines 35-39 and line 67, and figures 6-21 | 1-14 |
| Y | CN 115223561 A (SKYWORTH GROUP INTELLIGENT TECHNOLOGY CO., LTD.) 21 October 2022 (2022-10-21) <br> description, paragraphs 47-118, and figures 1-9 | 1-14 |
| Y | CN 109376669 A (NANCHANG NUBIYA TECHNOLOGY CO., LTD.; NUBIA TECHNOLOGY CO., LTD.) 22 February 2019 (2019-02-22) <br> description, paragraphs 4-153, and figures 1-8 | 1-14 |
| Y | CN 106358061 A (SICHUAN CHANGHONG ELECTRIC CO., LTD.) 25 January 2017 (2017-01-25) <br> description, paragraphs 8-43, and figure 1 | 1-14 |

☑ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **20 November 2023** | **23 November 2023** |

| Name and mailing address of the ISA/CN | Authorized officer |
| --- | --- |
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/117410** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 112863508 A (AI SPEECH TECHNOLOGY CO., LTD.) 28 May 2021 (2021-05-28)<br>entire document | 1-14 |
| A | CN 111933112 A (BEIJING SOUNDAL TECHNOLOGY CO., LTD.) 13 November 2020 (2020-11-13)<br>entire document | 1-14 |
| A | CN 111048089 A (GUANGDONG SPK ELECTRONIC TECHNOLOGY CO., LTD.) 21 April 2020 (2020-04-21)<br>entire document | 1-14 |
| A | US 2018204569 A1 (FORD GLOBAL TECHNOLOGIES LLC) 19 July 2018 (2018-07-19)<br>entire document | 1-14 |

## INTERNATIONAL SEARCH REPORT
### Information on patent family members

International application No.

**PCT/CN2023/117410**

| Patent document cited in search report | | | Publication date (day/month/year) | Patent family member(s) | | | Publication date (day/month/year) |
|---|---|---|---|---|---|---|---|
| CN | 115881118 | A | 31 March 2023 | None | | | |
| US | 10515623 | B1 | 24 December 2019 | None | | | |
| CN | 115223561 | A | 21 October 2022 | None | | | |
| CN | 109376669 | A | 22 February 2019 | None | | | |
| CN | 106358061 | A | 25 January 2017 | None | | | |
| CN | 112863508 | A | 28 May 2021 | None | | | |
| CN | 111933112 | A | 13 November 2020 | CN | 111933112 | B | 01 January 2021 |
| CN | 111048089 | A | 21 April 2020 | CN | 111048089 | B | 28 July 2023 |
| US | 2018204569 | A1 | 19 July 2018 | US | 11164570 | B2 | 02 November 2021 |
| | | | | US | 2022013122 | A1 | 13 January 2022 |
| | | | | US | 11676601 | B2 | 13 June 2023 |
| | | | | WO | 2018145130 | A1 | 09 August 2018 |

Form PCT/ISA/210 (patent family annex) (July 2022)

**REFERENCES CITED IN THE DESCRIPTION**

**Patent documents cited in the description**

- CN 202211376580